# EUROPEAN PATENT SPECIFICATION

(11) **EP 2 312 769 B1**
(45) Date of publication and mention of the grant of the patent: **25.07.2012**
(21) Application number: 10460037.4
(22) Date of filing: 09.09.2010
(51) Int. Cl.: H04B 10/08

(54) **A method of attenuating an optical measuring signal in the monitoring of a specified optical path in a working single-mode branch structure network.**
Verfahren zur Dämpfung eines optischen Messsignals bei der Überwachung eines bestimmten optischen Pfades in einem Arbeitseinzelmodus-Verzweigungsstrukturnetzwerk
Procédé pour atténuer un signal de mesure optique dans la surveillance d'un chemin optique donné dans un réseau monomodal à structure ramifiée

(30) Priority: 17.09.2009 PL 38906609
(43) Date of publication of application: 20.04.2011
(73) Proprietor: Telekomunikacja Polska S.A., 00-105 Warszawa (PL)
(72) Inventor: Cakala, Stanislaw Andrzej, 21-400 Lukow (PL); Koper, Zbigniew, 20-554 Lublin (PL)
(74) Representative: Piotrowicz, Alicja

(56) References cited:
- EP-A2- 0 499 529
- DE-A1- 4 231 856
- US-B1- 6 396 575

## Description

The above relates to a method of attenuation of an optical measuring signal in the monitoring of a specific optical path on a working single-mode branch structure FTTx network (Fiber to the x) wherein the optical measuring signal is produced by an optical reflectometer OTDR (Optical Time-Domain Reflectometer).

The steady increase in demand for bandwidth in telecommunications access networks due to the development of services such as broadband Internet access, TV on demand, and high-definition television is causing a more widespread implementation of fiber optic technology. The use of optical fibers requires quality monitoring of fiber optic infrastructure in order to maintain the required quality of provided services.

Optical access networks, due to the way of optical signal distribution, are divided into two main categories:
1) P2P networks (Point-to-Point),
2) P2MP networks (Point-to-Multipoint).

The second category includes both active networks which use electronic equipment for the amplification, conversion, and distribution of an optical signal as well as passive networks PON (Passive Optical Network), the construction of which uses only passive non-powered elements.

The primary diagnostic instrument used to monitor the quality and location of defects on the optical distribution network is an optical reflectometer OTDR .

There are various methods of using an optical reflectometer OTDR which differ in the way of connecting it to a passive optical network and the use of additional equipment necessary for the construction of the measuring system. These methods are divided into two main groups:
Group 1
   The methods in which an optical reflectometer OTDR is connected between the optical line termination and optical splitter, and the measurement is conducted in the direction from the optical line termination to the optical networking unit by the optical splitter. The optic network quality assessment is made on the basis of analysis of the optical signal reflected from the optical elements forming the network, wherein the signal is reflected by superposition of reflections originating from all branches of the optical distribution network.
Group 2
   This group consists of the methods in which the optical reflectometer OTDR is connected to the optical distribution network at the section between the optical splitter and the optical network unit, while the measurement is conducted in the direction of the optical network unit to the optical line termination. The method of conducting the test and analysis is similar to measurements conducted on P2P networks and is well known.

The main problem associated with the use of an optical reflectometer OTDR for optical distribution network diagnostics in both of these groups is that the optical measuring signal put into the optical distribution network cannot disturb the optical line termination and optical network unit, and thus cannot adversely affect the quality of service provided to network subscribers. This is realized by using special optical filters installed either directly on the optical line termination and optical network units or on the optical distribution network whose task it is to attenuate the optical measuring signal generated by the optical reflectometer OTDR.

In addition, similar optical filters must be installed directly on the optical reflectometer OTDR or between the optical reflectometer OTDR and the optical distribution network in order to attenuate the optical transmission signal of the optical line termination or optical transmission signals from optical network units (depending on the method of measurement).

US Patent No. 6396575 B1 describes a testing and measurement system for detecting and monitoring of defects and losses in passive optical systems. In this system, the optical reflectometer OTDR with an integrated optical polarization controller is connected to the optical distribution network, between the optical line termination and optical splitter, where on each branch of the optical distribution network, directly before the optical network units polarized markers are installed generating branch-unique attenuation values.

The quality of the network is assessed based on an analysis of the reflected optical measuring signal and measurement of the attenuation value of individual polarization markers, determined by the different polarization of the optical measuring signal from the optical reflectometer OTDR introduced into the network.

The subject matter of US patent No. 7310134 is a method of monitoring the quality of the optical paths in PON networks. A tunable optical reflectometer OTDR and optical filters used in this method are installed at the end of each of the monitored optical paths - directly before the optical network units. Each of the installed filters is characterised by a different unique value of the filtered light wavelength, with the operating range of a tunable optical reflectometer OTDR.

The tunable optical reflectometer OTDR is connected to the optical distribution network between the optical line termination and optical splitter. Then the series of measurements with the optical reflectometer OTDR are executed, gradually changing the wavelength of light of the measurement signal corresponding to the wavelength of a filtered light of the optical filters. The quality of the network is assessed based on the analysis of the obtained optical reflectometer OTDR trace.

Another method of quality monitoring in optical networks is known from DE-A-4231856.

The essence of the method of optical measuring signal attenuation in the course of the monitoring of a particular optical path in a working single-mode FTTx network of branched structure of the method is that the technical state of the particular optical path, located in the optical distribution network including an optical splitter of optical signal with input/output n-ports, is checked by the optical measuring signal, which is generated in the optical reflectometer OTDR. The optical reflectometer OTDR is protected by an optical filter from an optical transmission signal which is generated in the optical line termination.

Subsequently, on the optical path, the state of which is verified, a macrobending generation device is installed. An optical measuring signal is attenuated by a macrobending generation device.

Preferably, the characteristics of the macrobending generation device are adjusted by an equalizer to the parameters of the optical path the state of which is verified.

Preferably, the macrobending generation device is installed on the optical path between the optical line termination and the optical splitter, and the characteristics of the macrobending generation device are adjusted to the parameters of the optical line.

Preferably, the macrobending generation device is installed on the j-th optical path (where j = 1, 2, ..., n) between the optical splitter of the optical signal and optical reflectometer OTDR, and the characteristics of the macrobending generating device is adjusted to the parameters of said optical path.

Preferably, the optical measuring signal is generated in the optical reflectometer OTDR with the wavelength in the U-band (from 1625nm to 1675nm).

Preferably, the optical transmission signal is generated in the optical line termination with the wavelength in the range of 1480nm to 1500nm.

The fundamental beneficial effects of the use of the optical attenuation method of the optical measuring signal in monitoring of the specific optical path in a working single-mode FTTx network of branched structure, as in the above method, in relation to prior art, are based on direct monitoring of the quality of the optical distribution network in the working single-mode FTTx network of branched structure without the need to perform any adaptation work.

Moreover, they are based on conducting a working detailed diagnosis of a single-mode FTTx network of branched structure and on the fast location of defects in its structure, without having to disable and without any interference in its proper work, while providing the correct transmission of useable signals and information security.

There also exists the possibility of using diagnostics of the single-mode FTTx networks with branched structure of the OTDR which has no built-in filter attenuating the optical transmission signal from the optical line termination.

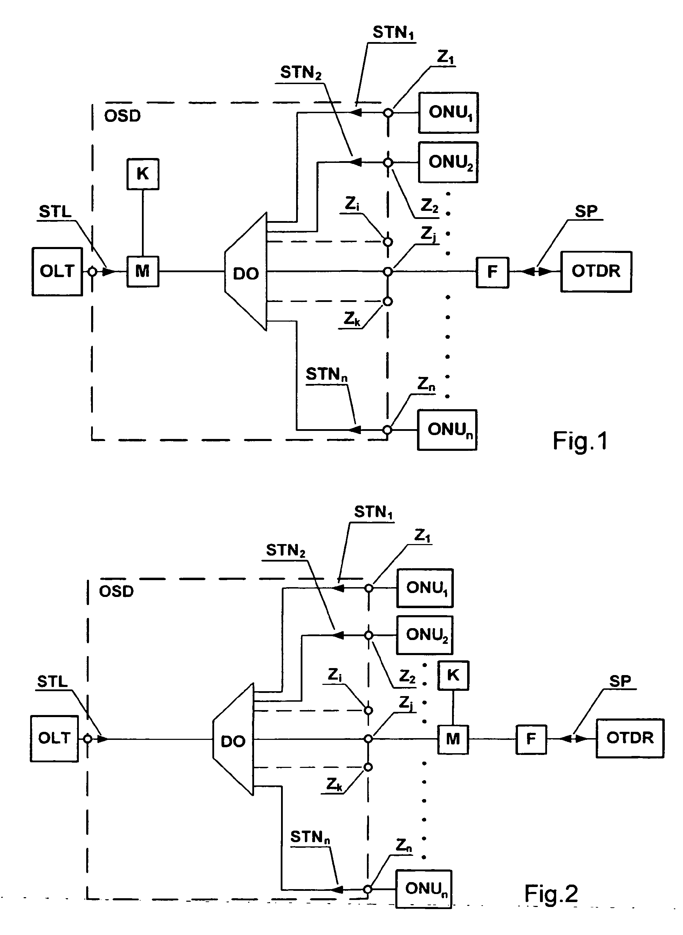

The implementation of the systems for carrying out the attenuation method of the optical measuring signal during the monitoring of a defined optical path in a working single-mode FTTx network of branched structure, according to the above method, are depicted on the drawings with Figure 1 showing a block diagram of a system, with the device producing a macrobending on the optical path between the optical line termination and optical splitter of the optical signal, while Figure 2 is a block diagram of a system in which macrobending generation device is installed on an optical path between the optical splitter of the optical signal and the optical reflectometer OTDR.

In an exemplary implementation, the attenuation method of the optical measuring signal while monitoring the defined optical path in a working single-mode FTTx network with branched structure, as in the above method is carried out in the optical distribution network OSD comprising an optical splitter DO with n input/output ports which are connected with n fiber optic mechanical connectors and fusion splices Z 1, Z 2, ... Z, Z j, Z k, ..., Z n. For the fiber optic connectors with n 1, Z 2, ..., Z, Z j, Z k, ..., Z n the optical transmission signals STN 1 STN 2, STN n...are supplied which are transmitted with n optical network units ONU 1, ONU 2, ... ONU N (Optical Network Unit). The optical splitter DO is connected to the optical line termination OLT (also known as Optical Line Terminal).

The optical distribution network OSD contains optical paths which are made of type G.625 optical fiber or optic fiber cable containing such fiber. The prior art of a particular optical path is checked with an optical measuring signal SP.

The optical measuring signal SP, by which the state of defined optical path is checked, is generated into the optical reflectometer OTDR. The optical measuring signal SP has a wavelength in the U-band (from 1625nm to 1675nm). The optical reflectometer OTDR is secured by an optical filter F from the optical transmission signal STL which is transmitted from the optical line termination OLT. The optical signal transmission STL is transmitted from optical line termination OLT with the wavelength range from 1480nm to 1500nm.

Then a macrobending generation device M is installed on the optical path, the state of which is verified, which attenuates the optical measuring signal SP.

Characteristics of the macrobending generation device M are adjusted by an equalizer K for the parameters of the optical path, the condition of which is verified.

Namely, the equalizer K selects the length of the radius of macrobending curvature and the number of macrobends.

In one example implementation of the method, a device producing macrobending M is installed on the optical path between the optical line termination OLT and the optical splitter DO of the optical signal and then characteristics of the macrobending generation device M are adjusted to the parameters of the optical path. In another implementation of the method, the macrobending generation device M is installed on the j-th (where j = 1, 2, ..., n) optical path (where j = 1, 2, ..., n) between optical splitter DO and the optical reflectometer OTDR, and then characteristics of the macrobending generation device M are adjusted to the parameters of the optical path.

After attenuation of the optical measuring signal SP in a specified optical path in the form of a optical fiber or optical fiber cable, a correct (undistorted) optical transmission signal is transmitted in this optical path from the optical line termination OLT or correct (undistorted) optical transmission signal STN 1, ... STN n from the optical network units ONU 1, ... ONU n.

## Claims

1. A method of attenuation of an optical measuring signal in the specified optical path monitoring in a working single-mode FTTx network of branched structure, the technical state of the specified optical path, located in the optical distribution network (OSD) comprising the optical splitter (DO) with n input/output ports, is checked with the optical measuring signal (SP), which is generated in the optical reflectometer (OTDR), wherein **characterized in that** an optical reflectometer (OTDR) is secured with the optical filter (F) against the optical transmission signal (STL) which is generated in the optical line termination (OLT), and then on the optical path the state of which is verified, a macrobending generating device (M), which attenuates the optical measuring signal (SP) is installed.

2. The method according to claim 1 **characterized in that** the characteristics of the macrobending generation device (M) to the optical parameters of the path the state of which is checked is adjusted by the equalizer (K).

3. The method according to claim 1 or 2 **characterized in that** the macrobending generation device (M) is installed on the optical path between the optical line termination (OLT) and optical splitter (DO).

4. The method according to claim 1 or 2 **characterized in that** the macrobending generation device (M) is installed on the j-th optical path (where j = 1, 2, ..., n) between the optical splitter (DO) and an optical reflectometer (OTDR).

5. The method according to claim 1 **characterized in that** in the optical reflectometer (OTDR) the optical measuring signal (SP) at a wavelength in the U-band (from 1625nm to 1675nm) is generated.

6. The method according to claim 1 **characterized in that** in the optical line termination (OLT) the optical transmission signal (STL) is generated with the wavelength range from 1480nm to 1500nm.

## Patentansprüche

1. Verfahren zur Dämpfung eines optischen Messsignals während der Überwachung eines spezifizierten Strahlengangs in einem laufenden einmodigen FTTx-Netzwerk mit einer verzweigten Struktur, wobei der technische Zustand des spezifizierten Strahlengangs, der sich in einem optischen Verteilungsnetz(OSD) befindet, das einen optischen Aufspalter des optischen Signals (DO) mit n Eingabe-Ausgabe-Ports enthält, mit einem optischen Messsignal (SP) geprüft wird, das in einem optischen Reflektometer (OTDR) erzeugt wird, **dadurch gekennzeichnet, dass** das optische Reflektometer (OTDR) mit einem optischen Filter (F) gegen ein optisches Übertragungssignal (STL) abgesichert wird, das in einem optischen Leitungsabschluss (OLT) erzeugt wird und anschließend wird in dem Strahlengang, dessen technischer Zustand geprüft wird, eine die Makrobiegung erzeugende Vorrichtung (M) installiert, mit der das optische Messsignal (SP) gedämpft wird.

2. Verfahren nach Anspruch 1, **dadurch gekennzeichnet, dass** mit dem Equalizer (K) die Eigenschaften der die Makrobiegung erzeugenden Vorrichtung (M) an die Parameter des Strahlengangs, dessen technischer Zustand geprüft wird, angepasst werden.

3. Verfahren nach einem der Ansprüche 1 oder 2, **dadurch gekennzeichnet, dass** die die Makrobiegung erzeugende Vorrichtung (M) im Strahlengang zwischen dem optischen Leitungsabschluss (OLT) und dem optischen Aufspalter (DO) installiert wird.

4. Verfahren nach einem der Ansprüche 1 oder 2, **dadurch gekennzeichnet, dass** die Makrobiegung erzeugende Vorrichtung (M) in dem *j*-ten Strahlengang (wobei *j* = 1, 2, ..., *n*) zwischen dem optischen Aufspalter des optischen Signals (DO) und dem optischen Reflektometer (OTDR) installiert wird.

5. Verfahren nach Anspruch 1, **dadurch gekennzeichnet, dass** in einem optischen Reflektometer (OTDR) ein optisches Messsignal (SP) mit einer Wellenlänge des U-Bands (von 1625nm bis 1675nm) erzeugt wird.

6. Verfahren nach Anspruch 1, **dadurch gekennzeichnet, dass** in einem optischen Leitungsabschluss (OLT) ein optisches Übertragungssignal (STL) mit einer Wellenlänge im Wellenlängenbereich von 1480 nm bis 1500 nm erzeugt wird.

## Revendications

1. Méthode d'atténuation d'un signal optique de mesure durant le monitorage d'un chemin optique déterminé, dans un réseau monomode FTTx fonctionnant, à structure ramifiée, l'état technique du chemin optique déterminé se trouvant dans le réseau optique de distribution (OSD) contenant un diviseur optique de signal optique (DO) avec n ports d'entrée-sortie, est contrôlé par un signal optique de mesure (SP), qui est généré dans un réflectomètre optique (OTDR), **caractérisée en ce que** le réflectomètre optique (OTDR) est sécurisé par un filtre optique (F) contre un signal optique de transmission (STL) qui est généré dans l'extrémité optique linéaire (OLT), et ensuite, sur le chemin optique dont l'état technique est vérifié, est installé un dispositif produisant des macrocourbures (M), avec lequel est atténué le signal optique de mesure (SP).

2. Méthode selon la revendication 1, **caractérisée en ce qu'**à l'aide du correcteur (K) la caractéristique du dispositif produisant les macrocourbures (M) est adaptée aux paramètres du chemin optique, que l'état technique est contrôlé.

3. Méthode selon la revendication 1 ou 2, **caractérisée en ce que** le dispositif produisant les macrocourbures (M) est installé sur le chemin optique entre l'extrémité optique linéaire (OLT) et le diviseur optique de signal optique (DO).

4. Méthode selon la revendication 1 ou 2, **caractérisée en ce que** le dispositif produisant les macrocourbures (M) est installé sur un j-tième chemin optique (où *j* = 1, 2, ... , *n*) entre le diviseur optique de signal optique (DO) et le réflectomètre optique (OTDR).

5. Méthode selon la revendication 1, **caractérisée en ce que** dans le réflectomètre optique (OTDR) est généré le signal optique de mesure (SP) à longueur d'onde de la bande U (de 1625nm à 1675nm).

6. Méthode selon la revendication 1, **caractérisée en ce que** dans l'extrémité linéaire (OLT) est généré le signal optique de transmission (STL) à longueur d'onde de l'intervalle des longueurs d'ondes de 1480 nm à 1500 nm.
